# Europäisches Patentamt

# European Patent Office

# Office européen des brevets

(19)

(11) Numéro de publication: **0 154 295**
**B1**

(12)

# FASCICULE DE BREVET EUROPÉEN

(45) Date de publication du fascicule du brevet:
02.11.88

(51) Int. Cl.⁴: **B 01 D 13/00**

(21) Numéro de dépôt: **85102213.7**

(22) Date de dépôt: **28.02.85**

(54) **Dispositif de séparation par membrane, et procédés de fabrication de celui-ci.**

(30) Priorité: **05.03.84 FR 8403368**

(43) Date de publication de la demande:
**11.09.85 Bulletin 85/37**

(45) Mention de la délivrance du brevet:
**02.11.88 Bulletin 88/44**

(84) Etats contractants désignés:
**BE CH DE FR GB IT LI NL SE**

(56) Documents cité:
**EP-A-0 092 839**
**GB-A-1 557 899**
**US-A-3 773 181**
**US-A-4 032 454**

(73) Titulaire: **CERAVER Société anonyme dite:, 10, quai Paul- Doumer, F-92400 Courbevoie (FR)**

(72) Inventeur: **Gillot, Jacques, 5 impasse de la Hount Odos, F-65310 Laloubere (FR)**
Inventeur: **Garcera, Daniel, 2bis boulevard de l'Abattoir, F-65000 Tarbes (FR)**
Inventeur: **Berge, Roland, 44 rue Jean Moulin, F-65320 Borderes sur l'Echez (FR)**

(74) Mandataire: **Weinmiller, Jürgen, Lennéstrasse 9 Postfach 24, D-8133 Feldafing (DE)**

## Description

La présente invention concerne un dispositif de séparation par membrane, comprenant un bloc macroporeux en matériau céramique fritté, percé de canaux longitudinaux parallèles dont la surface est recouverte d'une membrane, le cas échéant à deux couches, en un matériau céramique fritté ou organique, de porosité plus fine que celle du bloc ou perméable par diffusion, des moyens d'introduction d'un liquide à épurer à une extrémité des canaux, des moyens de recueil d'un liquide épuré ayant traversé la membrane des canaux et le bloc macroporeux jusqu'à sa surface externe, et des moyens de recueil d'un liquide résiduel à l'autre extrémité des canaux. Il s'étend en outre à des procédés de fabrication de tels dispositifs.

On a déjà proposé dans le brevet FR-A-2 061 933 un dispositif de filtration, constitué par un bloc macroporeux cylindrique en alumine percé de canaux longitudinaux parallèles, munis d'une membrane d'ultrafiltration à l'intérieur de ces canaux. On a aussi proposé dans le brevet US-A-4 069 157 un dispositif d'ultrafiltration, formé d'un bloc céramique percé d'une multiplicité de canaux parallèles, ceux-ci étant munis d'une membrane d'ultrafiltration.

Dans ces dispositifs, le liquide à filtrer arrivant par une chambre d'entrée à une extrémité d'entrée du bloc, s'écoule dans les canaux jusqu'à une extrémité de sortie vers une chambre de sortie, et le filtrat traverse radialement la membrane des canaux, puis le bloc, de porosité plus grossière que celle de la membrane, avant d'être recueilli à l'extérieur du bloc, cependant qu'un liquide résiduaire est recueilli dans la chambre de sortie et recyclé.

Ces dispositifs sont sujets à des fuites de liquide à filtrer à l'extrémité d'entrée du bloc, et de liquide résiduaire à son extrémité de sortie. Ces liquides sont en contact entre les canaux avec le bloc de porosité grossière, et une certaine fraction passe à travers le bloc pour rejoindre le filtrat, dont il vient diminuer la pureté. On ne peut donc obtenir une pureté élevée qu'en effectuant plusieurs filtrations successives.

On pourrait certes monter le bloc entre des joints parallèles.

Mais ceci entraîne des difficultés de montage et n'évite pas des fuites résiduelles.

La présente invention a pour but de procurer un dispositif de séparation par membrane, et notamment de filtration, qui permette d'obtenir un liquide épuré de pureté élevée à l'aide d'un étanchage très efficace et de bonne solidité mécanique.

Le dispositif de l'invention est caractérisé en ce que les extrémités du bloc sont imprégnées, au moins sur une partie de leur épaisseur à partir de leur surface externe, d'un matériau céramique fritté microporeux (c.à.d. ayant des pores de diamètre de l'ordre d'1 μm) tel que le diamètre maximal de passage du liquide à travers l'extrémité du bloc jusqu'aux moyens de recueil du liquide épuré, tel que mesuré par la méthode du point de bulle, soit au plus égal au plus petit diamètre de pore de la membrane poreuse des canaux.

Le matériau d'imprégnation des extrémités du bloc peut être un matériau céramique fritté de composition identique à celle du bloc macroporeux. Dans ce cas, le dispositif de filtration présente peu de risques de fissurations pouvant résulter de contraintes thermiques lors de sa fabrication, puis d'opérations telles que la filtration de fluides chauds, le nettoyage par des fluides chauds ou la sterilisation à la vapeur d'eau avant mise en service, du fait que les coefficients de dilatation du support et du matériau d'imprégnation sont les mêmes. La résistance à la corrosion de ce dernier est également aussi élevée que celle du support.

Dans le cas fréquent où les matériaux du bloc macroporeux et de la membrane sont de même composition, on bénéficie également d'une égalité des coefficients de dilatation et de la résistance à la corrosion de la membrane et du matériau d'imprégnation.

Si par ailleurs le matériau d'imprégnation est obtenu à partir d'une poudre de même composition et de même granulométrie que celle à partir de laquelle est obtenue la membrane, il est inutile d'effectuer des opérations de frittage séparées pour la membrane et le matériau d'imprégnation.

Lorsque le matériau d'imprégnation est un matériau céramique fritté identique à celui du bloc macroporeux, le procédé de fabrication du dispositif de filtration est caractérisé en ce que l'on prépare une barbotine concentrée bien défloculée et de viscosité élevée d'une poudre de matériau céramique d'imprégnation, en ce que l'on trempe successivement chacune des extrémités du bloc macroporeux dans cette barbotine, de préférence en agitant celle-ci aux ultrasons, puis en ce que l'on effectue le frittage du matériau d'imprégnation. On effectue de préférence l'imprégnation des extrémités du bloc macroporeux avant le dépôt de la membrane dans les canaux longitudinaux.

Les opérations de trempage, le cas échéant d'adaptation, et de frittage peuvent être répétées plusieurs fois.

Il est décrit ci-après, à titre d'exemples et en référence aux figures du dessin annexé, des extrémités de dispositifs de filtration selon l'invention et leurs procédés de fabrication.

La figure 1 représente schématiquement en coupe axiale un dispositif de filtration connu et les fuites qui viennent réduire la pureté du filtrat.

La figure 2 représente en coupe l'extrémité d'un dispositif de filtration, comprenant une zone imprégnée d'un matériau céramique de composition et de diamètre de pores identiques à ceux de la membrane.

La figure 3 représente à plus grande échelle le détail III de la figure 2.

La figure 4 représente une opération d'imprégnation d'une extrémité d'un bloc macroporeux à l'aide d'une barbotine de matériau céramique.

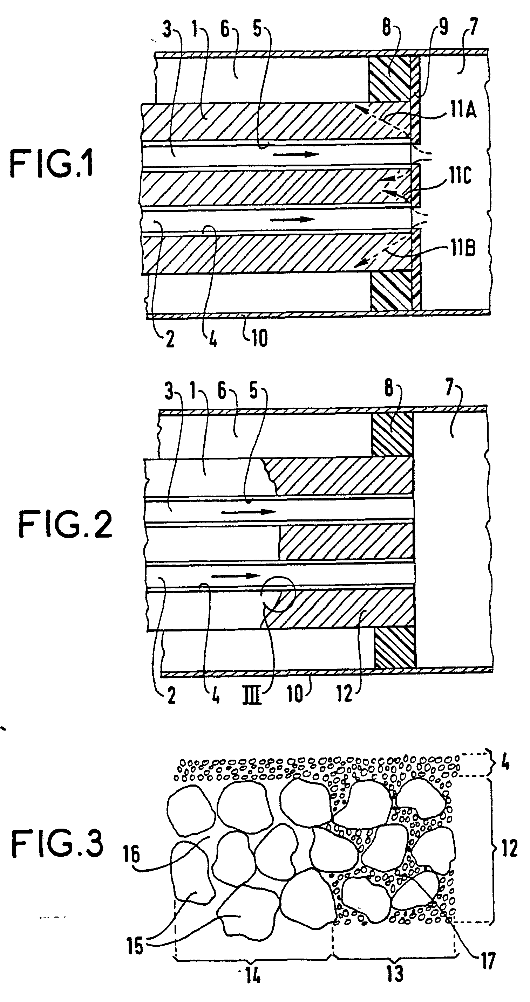

Dans la figure 1 comme dans les figures suivantes, le dispositif de filtration connu est représenté pour plus de simplicité comme ne comportant que deux canaux longitudinaux en coupe axiale, mais on comprendra qu'en général un tel dispositif en comporte un plus grand nombre.

Le bloc macroporeux 1 comporte des canaux tels que 2, 3, munis d'une membrane de filtration 4, 5.

La chambre de recueil du filtrat 6 est séparée de la chambre de recueil du fluide résiduel 7 par un joint d'étanchéité 8. Un joint 9 recouvre la face d'extrémité du bloc, sauf les extrémités des canaux. Les deux chambres sont entourées d'une enveloppe métallique 10.

Les flèches 11A, 11B, 11C indiquent les cheminements à travers le bloc macroporeux des fuites de liquide résiduaire vers la chambre de recueil du filtrat.

Dans les figures 2 et 3, le bloc 12 en alumine macroporeux est revêtu sur le pourtour des canaux longitudinaux de membranes de filtration 4, 5 en céramique microporeuse. Le bloc 12 est imprégné à son extrémité dans une zone 13 de fines particules céramiques frittées 17, obtenues à partir d'une poudre de même granulométrie que celle de la membrane et qui remplissent les interstices entre les grosses particules frittées 15 du bloc macroporeux.

La zone non imprégnée 14 du bloc macroporeux est formée de particules frittées 15, définissant de gros pores 16. Le bloc macroporeux a par exemple la forme d'un prisme hexagonal de hauteur 30 mm, comprenant 19 canaux parallèles disposés en réseau hexagonal. Le diamètre moyen de pores est de 15 µm et la porosité de 35 %. Le diamètre des canaux est de 4 mm, la distance entre leurs axes de 6,5 mm.

On dépose à l'intérieur des canaux une membrane de diamètre de pores 1 µm comme suit:

On effectue une opération d'engobage au moyen d'une suspension ayant la composition suivante:

- alumine de taille moyenne de particule 2 microns:

|  |  |
|---|---|
|  | 100 g |
| - alcool polyvinylique Rhodoviol 4/125 de la Sté Rhône-Poulenc | 30 g |
| - glycérine | 150 g |
| - ethanol | 550 g |
| - eau | 360 g |

et une viscosité de 30 m.Pqa.s à 20° C.

On introduit cette suspension dans les canaux du bloc poreux, puis après un temps de séjour d'environ 5 secondes, on vide les canaux. La couche de suspension qui s'est déposée sur leur surface est alors séchée, puis soumise à une opération de frittage à 1500° C. On obtient ainsi sur la surface des canaux une couche d'alumine poreuse qui est une membrane filtrante d'épaisseur 20 à 30 µm et de diamètre moyen de pores 1 µm.

On soumet l'intérieur de chaque canal à un brossage de façon à éliminer l'alumine en surépaisseur. Puis on pratique alors une cuisson en atmosphère oxydante à 1500° C. On obtient ainsi dans les canaux une membrane d'épaisseur 20 à 30 µm et de diamètre moyen de pores 1 µm.

On assure l'imprégnation des extrémités du bloc macroporeux comme suit:

## Exemple 1

Imprégnation des extrémités par de l'alumine sur le bloc à canaux munis d'une couche d'alumine comme décrit ci-dessus

On prépare une barbotine de particules d'alumine d'un diamètre moyen de 2 µm, en la défloculant au maximum à l'aide d'un agent tensio-actif approprié, tel que par exemple le produit DARVAN C de la Société POLYPLASTIC

La composition pondérale de cette barbotine est:

| | |
|---|---|
| Alumine | 63 % |
| Darvan C | 1,3 % |
| Alcool polyvinylique (Rhodoviol 4/125 de la Société Rhône Poulenc) | 0,3 % |
| Eau | 35,4 % |

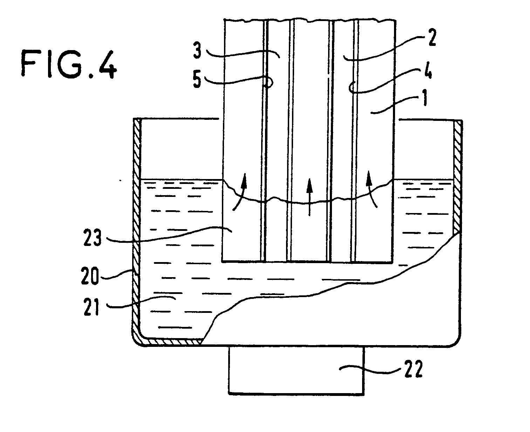

On imprègne chacune des extrémités du bloc à l'aide du dispositif représenté en figure 4 comprenant un récipient 20 rempli d'un bain 21 de la barbotine, et dont le fond est muni d'un générateur d'ultra-sons 22. La zone imprégnée 23 progresse jusqu'à atteindre une hauteur de 25 mm. On essuie la surface du bloc et de l'intérieur des canaux pour enlever l'excès de barbotine, on sèche l'extrémité du bloc, puis la soumet à une cuisson à 1500° C, en atmosphère oxydante. On obtient une zone imprégnée de particules frittées, présentant un diamètre moyen de pores de 1 µm, et par ailleurs des macropores ne communiquant pas. Par le test du point de bulle, on vérifie qu'il n'existe pas de porosité offerte au passage du liquide à filtrer dont le diamètre soit supérieur à 1 µm.

On peut vérifier que le poids d'alumine déposé dans la porosité du bloc est égal au poids d'alumine contenu dans un volume de barbotine égal au volume des pores de la zone imprégnée, c'est-à-dire que la barbotine toute entière a pénétré dans la porosité sans qu'il y ait pénétration préférentielle du liquide.

## Exemple 2

Imprégnation par de l'alumine des extrémités d'un bloc à canaux munis d'une membrane à deux couches

On dépose en premier lieu dans les canaux une couche d'alumine d'épaisseur 20 à 30 μm et de diamètre moyen de pores 1 μm comme décrit précédemment.

On dépose dans les canaux une seconde couche à porosité plus fine par une opération supplémentaire d'engobage avec une suspension de particules d'alumine d'un diamètre moyen de 0,5 μm, suivie d'un séchage et d'une cuisson en atmosphère oxydante à 1300°C. On obtient ainsi une seconde couche d'épaisseur 20 à 30 μm et de diamètre moyen de pores environ 0,2 μm.

On réalise une imprégnation des extrémités du bloc comme dans l'exemple 1, avec une barbotine de même composition, mais dont les particules d'alumine ont un diamètre moyen de 0,5 μm, identique à celle ayant servi à former la seconde couche de la membrane. Après imprégnation, on sèche et on cuit à 1300°C en atmosphère oxydante. On peut vérifier là aussi que le poids d'alumine déposé dans la porosité du bloc est égal au poids d'alumine contenu dans un volume de barbotine égal au volume des pores de la zone imprégnée. Par le test du point de bulle, on vérifie qu'il n'y a pas dans la zone imprégnée de porosité offerte au passage du liquide à filtrer de diamètre supérieur à 0,2 μm.

On peut également effectuer les mêmes opérations dans l'ordre
- dépôt de la couche de la membrane de porosité 1 μm,
- cuisson de cette couche,
- imprégnation des extrémités du bloc,
- dépôt de la seconde couche de la membrane, de porosité 0,2 μm,
- cuisson unique pour l'imprégnation et la seconde couche de la membrane.

Dans les exemples cités ci-dessus, on peut réaliser un dispositif de séparation par membrane par montage d'un ou plusieurs blocs tels que décrits dans les exemples dans une enceinte telle que représentée sur la figure 2 au moyen d'un joint qui s'appuie sur l'extrémité étanchée du bloc macroporeux de manière à séparer cette enceinte en une région ou circule le fluide à soumettre à la séparation membranaire et une région où est recueilli le fluide qui a traversé la membrane.

Dans les cas d'étanchéification des extrémités du bloc de filtration décrits ci-dessus, on peut assembler par la suite plusieurs blocs en parallèle en un faisceau, comme on assemblerait des tubes en parallèle.

Les dispositifs de séparation par membrane selon l'invention s'appliquent notamment aux opérations de filtration, d'ultrafiltration et d'osmose inverse.

## Revendications

1. Dispositif de séparation par membrane, comprenant un bloc macroporeux (1) en matériau céramique fritté, percé de canaux longitudinaux parallèles (2, 3) dont la surface est recouverte d'une membrane (4, 5), le cas échéant à deux couches, en un matériau céramique fritté ou organique, de porosité plus fine que celle du bloc, ou perméable par diffuson, des moyens d'introduction d'un liquide à épurer à une extrémité des canaux, des moyens (6) de recueil d'un liquide épuré ayant traversé la membrane des canaux et le bloc macroporeux jusqu'à sa surface externe, et des moyens (7) de recueil d'un liquide résiduel à l'autre extrémité des canaux, caractérisé en ce que la porosité du bloc est remplie, au moins sur une partie de l'épaisseur desdites extrémités à partir de leur surface externe, d'un matériau céramique fritté microporeux (c.à.d. ayant des pores de diamètre de l'ordre d'1 μm) tel que le diamètre maximal de passage du liquide à travers l'extrémité du bloc jusqu'aux moyens de recueil du liquide épuré, tel que mesuré par la méthode du point de bulle, soit au plus égal au plus petit diamètre de pore de la membrane poreuse des canaux.

2. Dispositif selon la revendication 1, caractérisé en ce que ledit matériau céramique microporeux a une composition identique à celle du bloc macroporeux.

3. Dispositif selon les revendications 1 ou 2, caractérisé en ce que ledit matériau céramique fritté microporeux est obtenu à partir d'une poudre de granulométrie au moins aussi fine que celle de la poudre à partir de laquelle est obtenue la membrane.

4. Dispositif selon la revendication 3, caractérisé en ce que la composition dudit matériau céramique microporeux est identique à celle de la poudre à partir de laquelle est obtenue la membrane.

5. Procédé de fabrication d'un dispositif de séparation par membrane, comprenant un bloc macroporeux en matériau céramique fritté, percé de canaux longitudinaux parallèles dont la surface est recouverte d'une membrane en un matériau céramique fritté ou organique de porosité plus fine que celle du bloc, ou perméable par diffusion, des moyens (6) de recueil d'un liquide épuré ayant traversé la membrane des canaux et le bloc macroporeux jusqu'à sa surface externe, et des moyens (1) de recueil d'un liquide résiduel à l'autre extrémité des canaux, caractérisé en ce que l'on prépare une barbotine concentrée bien défloculée d'une poudre d'un matériau céramique d'imprégnation identique à celui du bloc macroporeux, en ce que l'on trempe successivement chacune des extrémités du bloc macroporeux dans cette barbotine, de préférence en agitant celle-ci aux ultra-sons, puis en ce que l'on effectue le frittage du matériau d'imprégnation.

6. Procédé selon la revendication 5, caractérisé en ce que l'on effectue l'imprégnation des extrémités du bloc macroporeux avant le dépôt de la membrane dans les canaux longitudinaux.

7. Procéde selon la revendication 5 ou 6, caractérisé en ce que l'on répète plusieurs fois les opérations de trempage des extrémités du bloc macroporeux dans la barbotine, d'agitation aux ultra-sons, et de frittage.

**Patentansprüche**

1. Trennvorrichtung mit Membranen, mit einem makroporösen Block (1) aus gesintertem keramischem Material, welcher von parallelen Längskanälen (2, 3) durchsetzt ist, deren Oberfläche mit einer Membran (4, 5) bedeckt ist, die ggf. aus zwei Schichten gebildet ist und aus einem gesinterten, keramischen oder organischen Material besteht, deren Porosität feiner als die des Blockes oder diffusionsdurchlässig ist; mit Mitteln zur Einführung einer zu reinigenden Flüssigkeit an einem Ende der Kanäle; Mitteln (6) zur Aufnahme der gereinigten Flüssigkeit nach dem Durchqueren der Kanalmembrane und des makroporösen Blockes bis zur Außenseite; und mit Mitteln (7) zur Aufnahme der Restflüssigkeit am anderen Ende der Kanäle, dadurch gekennzeichnet, daß die Blockporen zumindest in einem Dickenabschnitt der Blockenden, beginnend an deren Außenfläche, mit einem mikroporösen, gesinterten, keramischen Material gefüllt sind, d. h. einem Material mit Porendurchmessern in der Größenordnung von 1 μm, derart, daß der größte Durchmesser für den Flüssigkeitsdurchtritt durch die Blockenden bis hin zu den Mitteln zur Aufnahme, der gereinigten Flüssigkeit, wie er mit der Punktblasenmethode bestimmt wird, höchstens gleich dem kleineren Porendurchmesser der porösen Kanalmembrane ist.

2. Vorrichtung nach Anspruch 1, dadurch gekennzeichnet, daß das mikroporöse keramische Material die gleiche Zusammensetzung wie dasjenige des makroporösen Blockes besitzt.

3. Vorrichtung nach den Ansprüchen 1 oder 2, dadurch gekennzeichnet, daß das mikroporöse, gesinterte, keramische Material aus einem Pulver gewonnen wird, dessen Körnigkeit mindestens ebenso fein ist wie diejenige des Pulvers, aus dem die Membran hergestellt wird.

4. Vorrichtung nach Anspruch 3, dadurch gekennzeichnet, daß die Zusammensetzung des mikroporösen, keramischen Materials mit derjenigen des Pulvers identisch ist, aus dem die Membran hergestellt wird.

5. Verfahren zur Herstellung der Trennvorrichtung mit Membranen, mit einem makroporösen Block aus gesintertem keramischem Material, welcher von parallelen Längskanälen durchsetzt ist, deren Oberfläche mit einer Membran aus einem gesinterten keramischen oder organischen Material bekleidet ist, deren Poren feiner als die des Blockes oder diffusionsdurchlässig sind; mit Mitteln (6) zur Aufnahme der gereinigten Flüssigkeit nach Durchqueren der Kanalmembran und des makroporösen Blockes bis zur Außenseite; und mit Mitteln (7) zur Aufnahme der Restflüssigkeit am anderen Ende der Kanäle, dadurch gekennzeichnet, daß ein konzentrierter gut entflockter Pulverschlamm eines keramischen Imprägnierungsmaterials zubereitet wird, das mit demjenigen des makroporösen Blockes identisch ist, daß jedes Ende des makroporösen Blockes nacheinander in den Schlamm getaucht wird, vorzugsweise unter Rühren desselben durch Ultraschall, und daß dann das Imprägnierungsmaterial gesintert wird.

6. Verfahren nach Anspruch 5, dadurch gekennzeichnet, daß die Imprägnierung der Enden des makroporösen Blocks vor dem Anbringen der Membran in den Längskanälen erfolgt.

7. Verfahren nach den Ansprüchen 5 oder 6, dadurch gekennzeichnet, daß die Arbeitsschritte des Eintauchens der Enden des makroporösen Blocks in den Schlamm, des Umrührens durch Ultraschall, und des Sinterns mehrmals wiederholt werden.

**Claims**

1. A membrane separator device comprising:
a macroporous block (1) made of sintered ceramic material pierced by a plurality of parallel longitudinal channels (2, 3) whose surfaces are lined by membranes (4, 5), possibly consisting of two layers of organic material or of sintered ceramic material, and having a finer porosity than the block or being permeable by diffusion; means for feeding a liquid to be purified into first ends of the channels; means (6) for collecting purified liquid after it has passed through the channel membranes and the macroporous block to reach the outside surface thereof; and means (7) for collecting residual liquid from the other end of the channels; characterized in that the pores of the block is filled, beginning at their outside surface and penetrating at least part of their thickness, by a ceramic sintered microporous material (i. e., having pores of a diameter in the order of 1 μm), such, that the maximum diameter, as measured by the bubble point method, of the liquid passageway through the block from its ends to the means for collecting the purified liquid is at maximum equal to the smaller pore diameter of the porous membranes of the channels.

2. A device according to claim 1, characterized in that the ceramic microporous material has a composition identical to that of the macroporous block.

3. A device according to claim 1 or 2, characterized in that the ceramic sintered microporous material is obtained from a powder having grain sizes which are at least as fine as those of the powder from which the membrane is made.

4. A device according to claim 3, characterized in that ceramic microporous material is identical in composition to the powder from which the membrane is obtained.

5. A method for making a membrane separator device comprising: a macroporous block made of sintered ceramic material pierced by a plurality of parallel longitudinal channels, whose surfaces are lined by membranes of organic material or of sintered ceramic material, and having a finer porosity than the block or being permeable by diffusion; means (6) for collecting purified liquid after it has passed through the channel membranes and the macroporous block to reach the outside surface thereof; and means (7) for collecting residual liquid from the other end of the channels; characterized in that a thoroughly defloculated slip having high viscosity is prepared from a powder of ceramic impregnating material of a composition identical to that of the macroporons block, that each end of the macroporous block is dipped successively into the slip, preferably while ultrasonically stirring the slip, and that the impregnating material is sintered.

6. A method according to claim 5, characterized in that the ends of the macroporous block are impregnated prior to the membranes being deposited in the longitudinal channels.

7. A method according to claim 5 or 6, characterized in that the operations of dipping the ends of the macroporous block into the slip, of stirring ultrasonically the slip, and of sintering are repeated several times.

FIG.1

FIG.2

FIG.3

# FIG.4